# EUROPÄISCHE PATENTANMELDUNG

(11) **EP 2 383 494 A1**
(43) Veröffentlichungstag der Anmeldung: **02.11.2011**
(21) Anmeldenummer: 11003277.8
(22) Anmeldetag: 19.04.2011
(51) Int. Cl.: F16J 15/32, F16J 15/34

(54) **Dichtring und Verfahren zu seiner Herstellung**

(30) Priorität: 29.04.2010 DE 102010018793
(71) Anmelder: Carl Freudenberg KG, 69469 Weinheim (DE)
(72) Erfinder: Pauly, Thomas, 22941 Bargteheide (DE)

(57) **Zusammenfassung**

Dichtring, umfassend einen Tragring (1), einen Haltering (2) und zumindest eine Dichtlippe (3), wobei die Dichtlippe (3) ungehaftet in einem Einbauraum (4) zwischen dem Tragring (1) und dem Haltering (2) angeordnet ist und wobei der Tragring (1) und der Haltering (2) durch einen Formschluss (5) miteinander verbunden sind.

## Beschreibung

### Technisches Gebiet

Die Erfindung betrifft einen Dichtring mit einer Dichtlippe.

### Stand der Technik

Solche Dichtringe sind allgemein bekannt, wobei die Dichtlippe zumeist aus einem elastomeren Werkstoff besteht und stoffschlüssig mit einem metallischen Stützkörper verbunden ist. Die Herstellung der vorbekannten Dichtringe ist bei kleinen Stückzahlen jedoch in wirtschaftlicher Hinsicht wenig rentabel, wegen der vergleichsweise hohen Kosten für entsprechende Formwerkzeuge.

### Darstellung der Erfindung

Der Erfindung liegt die Aufgabe zu Grunde, einen Dichtring der vorbekannten Art und ein Verfahren zu dessen Herstellung derart weiterzuentwickeln, dass Dichtringe auch in kleinen Stückzahlen wirtschaftlich herstellbar sind.

Diese Aufgabe wird erfindungsgemäß durch einen Dichtring nach Anspruch 1 und durch ein Verfahren nach Anspruch 11 gelöst. Auf vorteilhafte Ausgestaltungen des Dichtrings und auf eine vorteilhafte Weiterbildung des Verfahrens nehmen die jeweiligen Unteransprüche Bezug.

Zur Lösung der Aufgabe ist ein Dichtring vorgesehen, umfassend einen Tragring, einen Haltering und zumindest eine Dichtlippe, wobei die Dichtlippe ungehaftet in einem Einbauraum zwischen dem Tragring und dem Haltering angeordnet ist und wobei der Tragring und der Haltering durch einen Formschluss miteinander verbunden sind.

Hierbei ist von Vorteil, dass Dichtringe auch in kleinen Stückzahlen einfach und kostengünstig herstellbar sind. Einer stoffschlüssigen Verbindung zur Festlegung der Dichtlippe an einem Stützkörper bedarf es deshalb nicht. Außerdem ist von Vorteil, dass der Dichtring nach Art eines Baukastens aufgebaut ist. An den jeweiligen Anwendungsfall hinsichtlich Gestalt und/oder Werkstoff angepasste Dichtlippen lassen sich einfach mit dem Tragring und dem Haltering kombinieren, die einen zweiteiligen Stützkörper für die Dichtlippe bilden. Besteht die Dichtlippe beispielsweise aus einem PTFE-Werkstoff, ist weiter von Vorteil, dass eine solche Dichtlippe ebenfalls problemlos ungebunden zwischen den Tragring und den Haltering montiert werden kann. Es ist nicht mehr erforderlich, dass die PTFE-Dichtlippe zuvor, wie bei stoffschlüssig verbundenen Dichtringen, chemisch aktiviert werden muss, um eine Bindung zu einem metallischen Stützkörper zu ermöglichen.

Der Formschluss kann durch eine Rastverbindung gebildet sein, zum Beispiel dadurch, dass die Rastverbindung durch zumindest eine Rastnase am Tragring oder am Haltering gebildet ist, die in eine kongruent gestaltete Hinterschneidung des Halterings oder Tragrings einrastbar ist. Derartige Rastverbindungen zur Verbindung zweier Bauteile sind in vielen Ausführungen und Abmessungen einfach und kostengünstig herstellbar. Durch die Rastverbindung kann eine während der gesamten Gebrauchsdauer des Dichtrings dauerhaltbare Verbindung hergestellt werden. Gleichbleibend gute Gebrauchseigenschaften des Dichtrings während der gesamten Gebrauchsdauer sind dadurch sichergestellt.

Die Dichtlippe kann aus einem PTFE-imprägnierten Vliesstoff bestehen. Eine solche Dichtlippe ist gegen die meisten abzudichtenden Medien chemisch resistent. Außerdem ist ein solcher Vliesstoff alterungsbeständig, wodurch der Dichtring insgesamt eine hohe Standzeit aufweist.

Die Dichtlippe ist innerhalb des Einbauraums kraftschlüssig eingeklemmt. Während der bestimmungsgemäßen Verwendung des Dichtrings kann die Dichtlippe durch Tragring und Haltering, die miteinander montiert sind, elastisch vorgespannt sein. Auch für den Fall, dass der Werkstoff der Dichtlippe während der Gebrauchsdauer relaxiert, bleibt die ortsfeste Anordnung der Dichtlippe im Einbauraum zwischen dem Tragring und dem Haltering erhalten.

Die der Dichtlippe zugewandten Kontaktflächen von Tragring und Haltering können eine vergrößerte Oberflächenrauigkeit aufweisen als der Rest von Tragring und Haltering. Dadurch kann die Haltekraft, mit der die Dichtlippe im Einbauraum zwischen dem Tragring und dem Haltering angeordnet ist, vergrößert werden.

Zu der kraftschlüssigen Anordnung der Dichtlippe innerhalb des Einbauraums kann diese zusätzlich formschlüssig erfolgen. Es ist z.B. denkbar, dass die der Dichtlippe zugewandten Kontaktflächen von Tragring und Haltering krallenförmige Halteelemente aufweisen, die sich mit der Oberfläche der Dichtlippe formschlüssig verkrallen.

Die Dichtlippe kann als Axialdichtlippe ausgebildet sein. Insbesondere dann, wenn sich die Dichtlippe in ihrem Einbauraum zwischen dem Tragring und dem Haltering im Wesentlichen in axialer Richtung erstreckt, ist eine gute Fixierung der Dichtlippe im Einbauraum wichtig, um sicherzustellen, dass sich die Dichtlippe innerhalb des Einbauraums nicht unerwünscht verlagert/dass die Dichtlippe aus dem Einbauraum nicht herausfällt. Das ist nicht nur während der bestimmungsgemäßen Verwendung wichtig, wenn die Dichtlippe die abzudichtende Fläche anliegend berührt, sondern besonders während der Lagerung des Dichtrings vor dessen Einbau, wenn die Dichtlippe aus dem Einbauraum zwischen Tragring und Haltering im Wesentlichen in axialer Richtung frei heraussteht.

Innerhalb des Einbauraums kann ein Anpresselement für die Dichtlippe angeordnet sein, das die Dichtlippe in Einbauraum zusätzlich verspannt. Dadurch ist die geklemmte Dichtlippe innerhalb des Einbauraums besonders zuverlässig in alle Richtungen, zum Beispiel auch in Umfangsrichtung, fixiert. Für Anwendungsfälle, in denen die Dichtlippe größeren Kräften ausgesetzt ist, ist eine solche Ausgestaltung von Vorteil.

Das Anpresselement kann als Spiralbandfeder ausgebildet sein. Spiralbandfedern sind einfach und kostengünstig herstellbar und in vielen Abmessungen verfügbar.

Die Spiralbandfeder kann in einer Einbaunut des Tragrings oder des Halterings angeordnet sein. Die Spiralbandfeder bildet dann mit den Tragring oder dem Haltering vor der Komplettierung mit der Dichtlippe und dem Haltering oder dem Tragring eine Einheit. Die Montage des Dichtrings ist dadurch vereinfacht und die Gefahr von Montagefehlem auf ein Minimum reduziert. Die Spiralbandfeder ist derart in der Einbaunut angeordnet, dass sie die Einbaunut in Richtung der Dichtlippe überragt. Dadurch wird erreicht, dass das Anpresselement die Dichtlippe während der bestimmungsgemäßen Verwendung des Dichtrings unter elastischer Vorspannung anliegend berührt und dadurch in ihrer Position innerhalb des Einbauraums fixiert.

Der Tragring und/oder der Haltering können jeweils aus einem polymeren Werkstoff bestehen. Dadurch ist der Dichtring, unabhängig vom abzudichtenden Medium, rostfrei. Weiter ist von Vorteil, dass sich formschlüssige Verbindungen, insbesondere Rastverbindungen, aus polymeren Werkstoffen einfach und kostengünstig herstellen lassen.

Die Erfindung betrifft außerdem ein Verfahren zur Herstellung eines Dichtrings, wie zuvor beschrieben.

Zur Lösung der eingangs genannten Aufgabe ist es vorgesehen, dass in einem ersten Verfahrensschritt der Tragring, der Haltering und die Dichtlippe jeweils separat erzeugt werden, dass in einem zweiten Verfahrensschritt die Dichtlippe auf den Tragring oder den Haltering gelegt und dadurch eine vormontierbare Einheit gebildet wird und dass in einem dritten Verfahrensschritt der Haltering oder der Tragring mit der Einheit formschlüssig verbunden wird.

Die Herstellung ist besonders einfach und die Einzelteile, aus denen der Dichtring besteht, können nach Art eines Baukastens miteinander kombiniert werden. Dadurch ist das Verfahren zur rentablen Herstellung kleiner Stückzahlen von Dichtringen geeignet. Im dritten Verfahrensschritt wird der Haltering oder der Tragring mit der Einheit verrastet.

Gelangt ein Anpresselement zur Anwendung, wird während des ersten Verfahrensschritts in den Tragring oder den Haltering die Einbaunut eingebracht, und nach dem ersten und vor dem zweiten Verfahrensschritt wird das Anpresselement in die Einbaunut eingefügt. Beim Verrasten des Tragrings mit dem Haltering im dritten Verfahrensschritt wird die Dichtlippe zeitgleich und automatisch durch das Anpresselement zusätzlich innerhalb des Einbauraums verspannt.

Durch die ungehaftete Anordnung der Dichtlippe zwischen Tragring und Haltering im Einbauraum und dadurch, dass auch der Tragring und der Haltering einander ungehaftet zugeordnet sind, kann der Dichtring im Anschluss an seine Verwendung besonders einfach sortenrein recycelt werden.

### Kurzbeschreibung der Zeichnung

Ein Ausführungsbeispiel wird nachfolgend anhand der Fig. 1 bis 3 näher erläutert. Dieses Ausführungsbeispiel zeigt in schematischer Darstellung:
Fig. 1 einen Dichtring in geschnittener Darstellung,
Fig. 2 den Dichtring aus Fig. 1 im eingebauten Zustand,
Fig. 3 einen Ausschnitt aus dem Dichtring aus den Fig. 1 und 2 in stark vergrößerte Darstellung.

### Ausführung der Erfindung

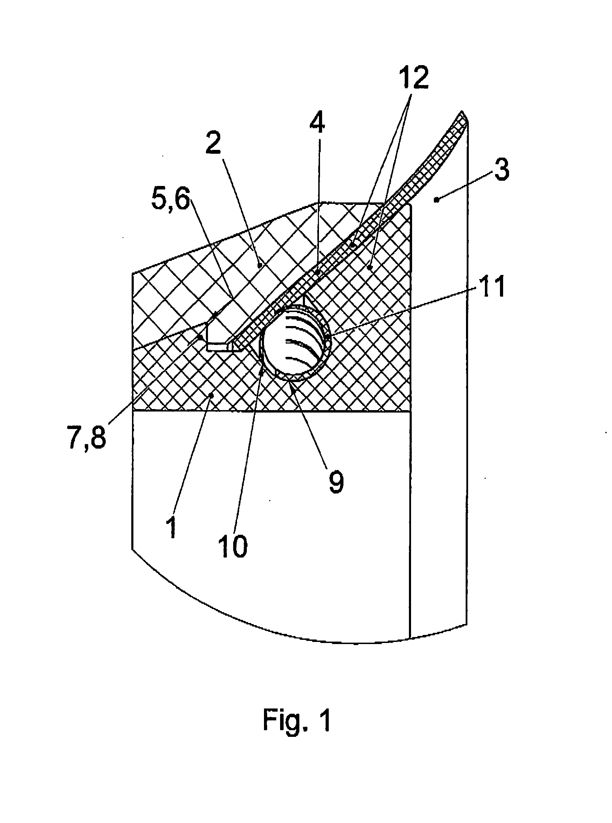

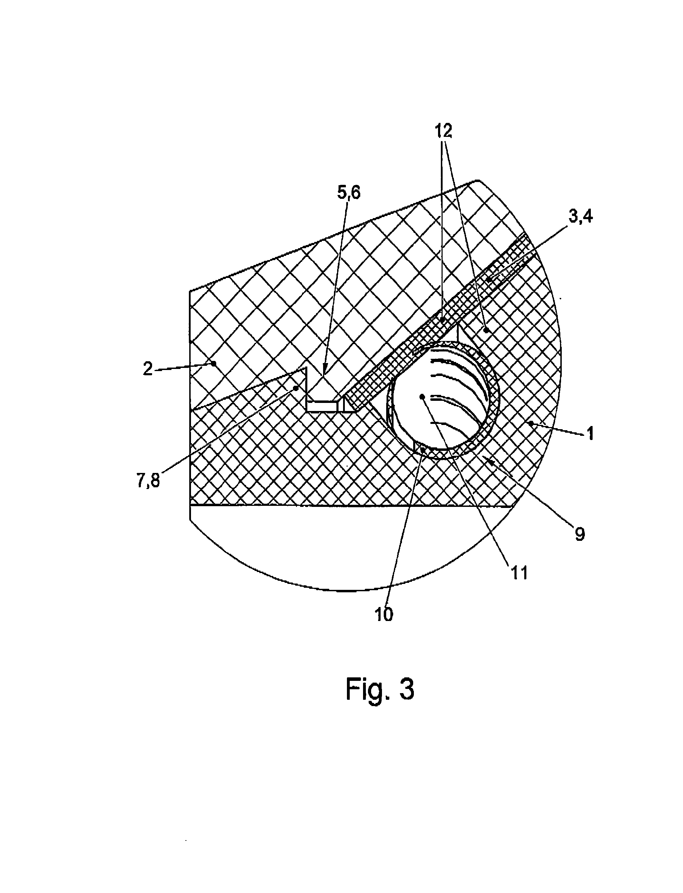

In den Fig. 1 bis 3 ist ein Ausführungsbeispiel des erfindungsgemäßen Dichtrings gezeigt. Der Dichtring umfasst im gezeigten Ausführungsbeispiel vier Bauteile, nämlich den Tragring 1, den Haltering 2, die Dichtlippe 3 und das Anpresselement 9 in Form der Spiralbandfeder 10.

Der Tragring 1 und der Haltering 2 bestehen jeweils aus einem polymeren Werkstoff, die Dichtlippe 3 aus einem PTFE-imprägnierten Vliesstoff. Die Spiralbandfeder 10 besteht aus einem metallischen Werkstoff.

Entscheidend ist, dass die zuvor genannten Bauteile 1, 2, 3 und 9, 10 einander jeweils ungehaftet zugeordnet sind.

Der Tragring 1 und der Haltering 2 begrenzen einen Einbauraum 4, in dem die Dichtlippe 3 unter elastischer Vorspannung kraftschlüssig angeordnet ist. Der Tragring 1 und der Haltering 2 sind durch den Formschluss 5 miteinander verbunden, wobei der Formschluss 5 durch die Rastverbindung 6 gebildet ist. Die Rastverbindung 6 wird durch die Rastnase 7 am Tragring 1 erzeugt, die in eine kongruente gestaltete Hinterschneidung 8 des Haltering 2 eingerastet ist.

Um einen besseren Halt der Dichtlippe 3 innerhalb des Einbauraums 4 zu gewährleisten, weist der Tragring 1 eine Einbaunut 11 für die Spiralbandfeder 10 auf, wobei die Spiralbandfeder 10 die Einbaunut 11 radial in Richtung der Dichtlippe 3 überragt. Die Dichtlippe 3 wird durch die Spiralbandfeder 10 im Einbauraum 4 zusätzlich verspannt.

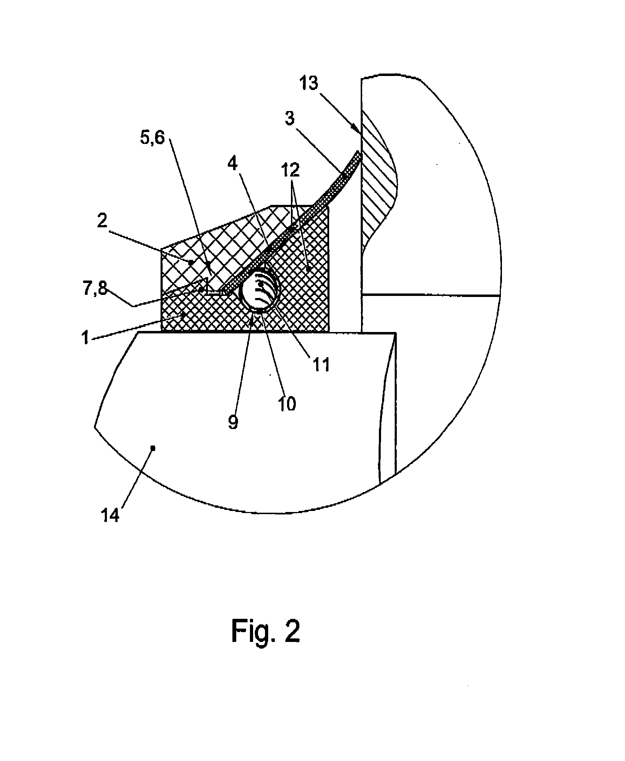

In dem hier gezeigten Ausführungsbeispiel ist die Dichtlippe 3 als Axialdichtlippe ausgeführt und stützt sich, wie in Fig. 2 dargestellt, axial dichtend an einer abzudichtenden Fläche 13 ab. Der Dichtring ist auf einer Welle 14 angeordnet.

Die Montage des Dichtrings erfolgt folgendermaßen:
In einem ersten Verfahrensschritt werden der Tragring 1, der Haltering 2 und die Dichtlippe 3 sowie die Spiralbandfeder 10 jeweils separat erzeugt.
Nach dem ersten Verfahrensschritt wird die Spiralbandfeder 10 in die Einbaunut 11 des Tragrings 1 eingefügt.

In einem zweiten Verfahrensschritt wird die Dichtlippe 3 auf den Tragring 1 gelegt und bildet dadurch zusammen mit dem Tragring 1 die vormontierbare Einheit 12.

Im dritten Verfahrensschritt wird der Haltering 2 mit seiner Hinterschneidung 8 in axialer Richtung über die Rastnase 7 des Tragrings 1 geschoben, bis der

Tragring 1 und der Haltering 2 miteinander verrasten. Dadurch ist der Formschluss 5 in Form der Rastverbindung 6 hergestellt.

## Patentansprüche

1. Dichtring, umfassend einen Tragring (1), einen Haltering (2) und zumindest eine Dichtlippe (3), wobei die Dichtlippe (3) ungehaftet in einem Einbauraum (4) zwischen dem Tragring (1) und dem Haltering (2) angeordnet ist und wobei der Tragring (1) und der Haltering (2) durch einen Formschluss (5) miteinander verbunden sind.

2. Dichtring nach Anspruch 1, **dadurch gekennzeichnet, dass** der Formschluss (5) durch eine Rastverbindung (6) gebildet ist.

3. Dichtring nach Anspruch 2, **dadurch gekennzeichnet, dass** die Rastverbindung (6) durch zumindest eine Rastnase (7) am Tragring (1) oder am Haltering (2) gebildet ist, die in eine kongruent gestaltete Hinterschneidung (8) des Halterings (2) oder Tragrings (1) einrastbar ist.

4. Dichtring nach einem der Ansprüche 1 bis 3, **dadurch gekennzeichnet, dass** die Dichtlippe (3) aus einem PTFE-imprägnierten Vliesstoff besteht.

5. Dichtring nach einem der Ansprüche 1 bis 4, **dadurch gekennzeichnet, dass** die Dichtlippe (3) innerhalb des Einbauraums (4) kraftschlüssig eingeklemmt ist.

6. Dichtring nach einem der Ansprüche 1 bis 5, **dadurch gekennzeichnet, dass** die Dichtlippe (3) eine Axialdichtlippe ist.

7. Dichtring nach einem der Ansprüche 1 bis 6, **dadurch gekennzeichnet, dass** innerhalb des Einbauraums (4) ein Anpresselement (9) für die Dichtlippe (3) angeordnet ist, das die Dichtlippe (3) im Einbauraum (4) zusätzlich verspannt.

8. Dichtring nach Anspruch 7, **dadurch gekennzeichnet, dass** das Anpresselement (9) als Spiralbandfeder (10) ausgebildet ist.

9. Dichtring nach Anspruch 8, **dadurch gekennzeichnet, dass** die Spiralbandfeder (10) in einer Einbaunut (11) des Tragrings (1) oder des Halterings (2) angeordnet ist.

10. Dichtring nach einem der Ansprüche 1 bis 9, **dadurch gekennzeichnet, dass** der Tragring (1) und/oder der Haltering (2) jeweils aus einem polymeren Werkstoff bestehen.

11. Verfahren zur Herstellung eines Dichtrings nach einem der Ansprüche 1 bis 10, **dadurch gekennzeichnet, dass** in einem ersten Verfahrensschritt der Tragring (1), der Haltering (2) und die Dichtlippe (3) jeweils separat erzeugt werden, dass in einem zweiten Verfahrensschritt die Dichtlippe (3) auf den Tragring (1) oder den Haltering (2) gelegt und dadurch eine vormontierbare Einheit (12) gebildet wird und dass in einem dritten Verfahrensschritt der Haltering (2) oder der Tragring (1) mit der Einheit (12) formschlüssig verbunden wird.

12. Verfahren nach Anspruch 11, **dadurch gekennzeichnet, dass** während des ersten Verfahrensschritts in den Tragring (1) oder den Haltering (2) die Einbaunut (11) eingebracht wird.

13. Verfahren nach einem der Ansprüche 11 oder 12, **dadurch gekennzeichnet, dass** nach dem ersten und vor dem zweiten Verfahrensschritt das Anpresselement (9) in die Einbaunut (11) eingefügt wird.
